# EUROPÄISCHE PATENTSCHRIFT

(11) **EP 2 712 494 B1**
(45) Veröffentlichungstag und Bekanntmachung des Hinweises auf die Patenterteilung: **06.06.2018**
(21) Anmeldenummer: 13175216.4
(22) Anmeldetag: 05.07.2013
(51) Int. Cl.: A01B 79/00

(54) **Verfahren zur Herstellung einer an ein landwirtschaftliches Arbeitsgerät anbringbaren Kennzeichnung**
Method for the preparation of a marking for attachment to an agricultural work device
Procédé de fabrication d'un marquage pouvant être placé sur un appareil de travail agricole

(30) Priorität: 28.09.2012 DE 102012109213
(43) Veröffentlichungstag der Anmeldung: 02.04.2014
(73) Patentinhaber: CLAAS Tractor SAS, 78141 Velizy-Villacoublay (FR)
(72) Erfinder: Bizouarn, Loic, 78210 St Cyr`l Ecole (FR)
(74) Vertreter: Budach, Steffen

(56) Entgegenhaltungen:
- EP-A1- 1 346 622
- EP-A1- 2 018 981
- DE-C1- 10 153 145
- US-A1- 2004 024 510
- US-A1- 2012 016 517

## Beschreibung

Die Erfindung betrifft ein Verfahren zur Herstellung einer an ein landwirtschaftliches Arbeitsgerät anbringbaren Kennzeichnung gemäß dem Patentanspruch 1.

Landwirtschaftliche Fahrzeuge wie insbesondere Traktoren werden oftmals in Kombination mit einem daran anbaubaren Arbeitsgerät eingesetzt. Bei einem an einen Traktor anbaubaren Arbeitsgerät kann es sich beispielsweise um eine Futtererntemaschine wie eine Ballenpresse, Heuwerbungsmaschine (Schwader, Wender) etc., oder um eine Bodenbearbeitungsmaschine, Saat- oder Düngemaschine oder dergleichen handeln. Zahlreiche weitere Typen anbaubarer Arbeitsgeräte, wie beispielsweise auch Erntevorsatzgeräte sind aus der Praxis der Landtechnik bekannt.

Damit ein landwirtschaftliches Fahrzeug wie ein Traktor auf sichere und zudem möglichst effiziente Weise mit einem Arbeitsgerät zusammenarbeitet, ist es zweckmäßig, die technischen Anforderungen und Gegebenheiten des jeweiligen Arbeitsgeräts zu berücksichtigen, die beispielsweise herstellerbedingt, baujahrbedingt, austattungsbedingt etc. auch für gleiche Arten von Geräten stark voneinander abweichen können. Aufgrund der Vielzahl auf dem Markt verfügbarer Geräte stellt es für Maschinenbediener häufig eine große Schwierigkeit dar, sich in Kenntnis der jeweils relevanten Informationen zu setzen. Die Annahme unrichtiger Informationen oder das Fehlen von Informationen können nachteilige Auswirkungen auf die Funktionsweise, Sicherheit, Genauigkeit, Effizienz etc. des Arbeitsgeräts und/oder der Kombination aus Arbeitsgerät und Fahrzeug haben.

Aus dem Stand der Technik sind Systeme bekannt, wonach eine Erkennung eines angebauten Arbeitsgeräts über ein zwischen Arbeitsmaschine und Arbeitsgerät kommunizierendes Bussystem erfolgt, d.h. über einen direkten, kabelgebundenen Datenaustausch zwischen den Geräten. Verwiesen sei in diesem Zusammenhang beispielsweise auf die DE 198 04 740 A1.

Nachteilig daran ist, dass Fahrzeug und Arbeitsgerät über miteinander kommunizierende Bussysteme verfügen müssen. Dies ist zumindest bei älteren Fahrzeugen und/oder älteren Arbeitsgeräten nicht der Fall und nur mit hohem Aufwand nachzurüsten. Zudem bestehen bei derartigen Systemen oftmals Probleme der Kompatibilität, was unterschiedlichste Ursachen haben kann. Insbesondere werden unter verschiedenen Herstellern der Fahrzeuge oder Arbeitsgeräte oftmals unterschiedliche Kommunikationsstandards verwendet, die eine Kommunikation ausschließen oder zumindest fehlerträchtig machen. Ein weiterer Nachteil ist die notwendige Kabelverbindung zwischen Fahrzeug und Arbeitsgerät, die nicht nur lästig in der Handhabung ist, sondern auch störungsanfällig sein kann.

Aus der DE 10 2007 034 167 A1 ist es bekannt, Identifikationsdaten eines Arbeitsgeräts von einem im Radiofrequenzbereich auslesbaren Transponder (RFID, d.h. "radiofrequency identification") auszulesen. Einige der zuvor genannten Nachteile werden damit vermieden, jedoch stellen die jeweils nötige Ausstattung von Arbeitsgeräten mit einer Kennzeichnung in Form eines Transponders sowie die Anschaffung eines zugehörigen Lese-/Schreibgeräts für den Maschinenbetreiber einen hohen Kostenaufwand dar. Die US 2004 0024510 A1 offenbart ein System und Verfahren zum Vorsehen von Daten für ein Maschinensteuersystem, wobei die Daten jedoch auf einem entfernt gelegenen Datenspeichersystem abgelegt sind und eine Verbindung mit diesem entfernt gelegenen Datenspeichersystem zum Datenabruf notwendig ist.

Vor diesem Hintergrund ist es Aufgabe der vorliegenden Erfindung, ein einfach durchzuführendes und kostengünstiges Herstellverfahren für eine maschinell erfassbare Kennzeichnung eines landwirtschaftlichen Arbeitsgeräts anzugeben. Die Kennzeichnung soll durch einen Anwender selbst herstellbar sein.

Die Aufgabe wird gelöst durch ein Verfahren zur Herstellung einer an ein landwirtschaftliches Arbeitsgerät anbringbaren Kennzeichnung nach Anspruch 1.

Demnach wurde erkannt, dass alternativ zu der aus dem Stand der Technik gemäß DE 10 2007 034 167 A1 bekannten Erkennung eines Arbeitsgeräts mittels RFID-Technik eine Kennzeichnung eines Arbeitsgeräts mit einem optisch lesbaren Zeichen für den beschriebenen Einsatzzweck vorteilhaft ist, unter anderem da sich eine derartige Kennzeichnung auf kostengünstige und einfache Weise herstellen lässt. Dabei werden zunächst einmal die das Arbeitsgerät kennzeichnenden Informationen identifiziert. Anschließend werden diese Informationen in ein optisch lesbares Zeichen umgewandelt. Als optisch lesbares Zeichen ist dabei bevorzugt ein Zeichen zu verstehen, dessen Informationsgehalt in einer standardisierten Form vorliegt, um maschinell, insbesondere unter Nutzung einer optischen Leseeinrichtung, zuverlässig erfassbar zu sein. Schließlich wird das so erzeugte optisch lesbare Zeichen auf einen Träger aufgebracht, der zusammen mit dem aufgebrachten Zeichen die Kennzeichnung bildet.

Bei dem Zeichen kann es sich zunächst um ein beliebig gestaltetes Zeichen handeln, das geeignet ist, das Arbeitsgerät kennzeichnende Informationen unterschiedlicher Art zu beinhalten und auf optischem Weg maschinell zuverlässig ausgelesen zu werden. Mit Hilfe einer optischen Leseeinrichtung können in dem Zeichen enthaltene Informationen über das Arbeitsgerät wieder ausgelesen werden, um beispielsweise einem Maschinenbediener zur Verfügung zu stehen oder auf noch näher zu beschreibende Weise einem Fahrzeug zugeführt zu werden, an welches das Arbeitsgerät anbaubar ist.

Da sich ein optisch lesbares Zeichen - z.B. durch Drucken - deutlich einfacher und kostengünstiger herstellen lässt als ein RFID-Chip, kann mittels des Verfahrens auf vorteilhafte Weise ein Arbeitsgerät mit einfachen Mitteln mit einer Kennzeichnung versehen werden, die charakteristische Informationen des Arbeitsgeräts enthält. Durch die leichte Herstellbarkeit ist eine einfache und kostengünstige Möglichkeit geschaffen, unterschiedliche, insbesondere auch ältere Arbeitsgeräte oder Arbeitsgeräte unterschiedlicher Hersteller mit einer maschinell lesbaren Gerätekennzeichnung zu versehen. Demnach ist auch eine Nachrüstung mit geringem Aufwand möglich. Kompatibilitätsprobleme bestehen nicht, da sich das Zeichen jeder Art von Arbeitsgerät nachträglich zuordnen lässt. Aufgrund eines geringen Materialwerts der Kennzeichnung besteht praktisch kein Diebstahlrisiko, selbst wenn diese beispielsweise leicht entfernbar an der Arbeitsmaschine angebracht ist. In dem Zeichen hinterlegte Informationen lassen sich einfach durch Neuherstellung ändern.

Die in dem Zeichen hinterlegten Informationen können grundsätzlich unterschiedlichen Charakters sein, d.h. verschiedensten technischen, aber auch nicht-technischen Zwecken dienen. Bevorzugt umfassen die Informationen gerätespezifische Angaben für den Betrieb des Arbeitsgeräts und/oder gerätespezifische Angaben zu Wartung, Reparatur und/oder Ersatzteilen des Arbeitsgeräts, und/oder individuell vergebbare Angaben zum Arbeitsgerät. Es können beispielsweise Angaben wie Name, Hersteller, Typ, Baujahr, Abmessungen (Arbeitstiefe, Arbeitsbreite, Länge), Gewicht, Schwerpunktlage des Arbeitsgeräts hinterlegt sein. Weiterhin können bevorzugte hydraulische Kanalbelegungen, Ventileinstellungen, Flussraten, Zeitgeberwerte oder Zapfwellengeschwindigkeiten, Zapfwellenmomente, Anschlussmaße hinterlegt sein. Viele weitere Angaben sind abhängig vom Typ des Arbeitsgeräts denkbar, die im Zusammenhang mit dem Betrieb des Arbeitsgeräts selbst im weitesten Sinne eine Rolle spielen können und/oder die für den angebauten Betrieb an das Fahrzeug von Nutzen sein können. Unter anderem könnten auch individuell für das Arbeitsgerät Informationen hinterlegt sein wie beispielsweise persönliche Erfahrungswerte oder Warnhinweise.

Alternativ oder ergänzend können die in dem Zeichen hinterlegten Informationen einen Verweis auf eine weitere Informationsquelle, insbesondere eine Internetadresse, umfassen. Durch einen solchen Verweis wäre - eine bestehende Internetverbindung einer Leseeinrichtung vorausgesetzt - z.B. ein interaktiver Zugriff auf tiefergehende und/oder laufend aktualisierte Informationen beispielsweise des Geräteherstellers möglich.

Bei dem beschriebenen Verfahren können vorteilhaft einige oder bevorzugt sogar sämtliche der Schritte im Rahmen eines unterstützenden elektronischen Datenverarbeitungsprogramms durchgeführt werden. Vorteilhaft wird zumindest der Schritt des Identifizierens der Informationen im Rahmen eines elektronischen Datenverarbeitungsprogramms ausgeführt.

Dies kann vorteilhaft dadurch erfolgen, dass das Datenverarbeitungsprogamm eine Abfrageroutine aufweist, welche zur Auswahl und/oder Eingabe kennzeichnender Informationen des Arbeitsgeräts durch eine Bedienperson auffordert. Die auszuwählenden und/oder einzugebenden Informationen können dabei für die Bedienperson frei bestimmbar oder zuordenbar sein, wodurch sich eine hohe Flexibilität für Arbeitsgeräte unterschiedlichster Hersteller ergibt.

Eine vorteilhafte Weiterbildung des Verfahrens sieht vor, dass die Informationen beim Wandeln in das optisch lesbare Zeichen insbesondere binär verschlüsselt werden. Das Zeichen kann so eine hohe Dichte an Informationen enthalten und ggf. auch vor dem Zugriff durch Dritte geschützt sein. Eine binäre Verschlüsselung bietet dabei den Vorteil einer zuverlässigen Auslesbarkeit des Zeichens auch bei unterschiedlichen Lichtbedingungen, wenn nämlich das Zeichen aus einem schwarz-weiß Code gebildet wird. In einfacher Form kann es sich beispielsweise um einen Strichcode handeln.

Gemäß einer bevorzugten Ausgestaltung sind die Informationen in dem Zeichen als zweidimensionale Matrix, insbesondere als sogenannter QR-Code ("Quick Response Code"), verschlüsselt. Das Zeichen besteht dann bevorzugt aus einer zweidimensionalen Matrix aus schwarzen und weißen Punkten, um die codierten Informationen binär darzustellen. Im Fall eines QR-Codes ist die Matrix quadratisch, wobei eine spezielle Markierung in drei der vier Ecken die Orientierung vorgibt. Die Daten des QR-Codes sind durch einen fehlerkorrigierenden Code in sich geschützt, so dass ein Verlust von bis zu 30% des Codes toleriert wird, d.h. ein Auslesen auch dann noch möglich ist. Für eine Anwendung an einem landwirtschaftlichen Arbeitsgerät bietet eine Codierung gemäß QR-Code demnach den Vorteil, dass auch bei möglichen betriebsbedingten Verschmutzungen ein zuverlässiges Auslesen des Zeichens möglich ist. Eine Matrixverschlüsselung bietet gegenüber einer eindimensionalen (Strichcode) Verschlüsselung daneben den Vorteil deutlich höherer Informationsdichte.

Es ist zweckmäßig, auch den Schritt des Wandelns der Informationen im Rahmen eines elektronischen Datenverarbeitungsprogramms auszuführen, um eine fehlerfreie, schnelle und komfortable Wandlung der Informationen zu erzielen.

Auch der Schritt des Aufbringens der Informationen auf einen Träger wird vorzugsweise im Rahmen eines elektronischen Datenverarbeitungsprogramms ausgeführt, insbesondere indem das erzeugte Zeichen an eine Druckeinrichtung übergeben wird, um das Zeichen auf den Träger zu drucken.

Das Verfahren zur Herstellung der Kennzeichnung kann vorteilhaft ortsunabhängig durchführbar sein, indem ein elektronisches Datenverarbeitungsprogramm, das einzelne oder sämtliche der Verfahrensschritte unterstützt, zumindest teilweise auf einer mobilen Kommunikationseinrichtung wie beispielsweise einem Smartphone, Tablet-PC, Notebook oder dergleichen ausführbar ist. Eine derartige Einrichtung verfügt vorteilhaft über eine Schnittstelle (USB, WiFi, Bluetooth, Infrarot, Funk), um das erzeugte Zeichen an eine Druckeinrichtung zu übermitteln.

In weiterhin vorteilhafter Weise kann die mobile Kommunikationseinrichtung daneben auch dafür verwendbar sein, mittels einer integrierten Leseeinrichtung, insbesondere einer Kamera, das hergestellte Zeichen im späteren Betrieb des Arbeitsgeräts auszulesen.

Die Erfindung betrifft auch eine Kennzeichnung eines landwirtschaftlichen Arbeitsgeräts, das vorzugsweise nach einem zuvor beschriebenen Verfahren hergestellt ist und ein optisch lesbares Zeichen aufweist, das Informationen enthält, welche das Arbeitsgerät kennzeichnen. Diese ist vorzugsweise in Form oder als Teil eines Schildes an dem Arbeitsgerät anbringbar.

Die Kennzeichnung kann weiterhin mit einer Schutzeinrichtung versehen sein, die das Zeichen vor äußeren Umgebungseinflüssen, wie insbesondere Witterung und/oder betriebsbedingter Verschmutzung schützt.

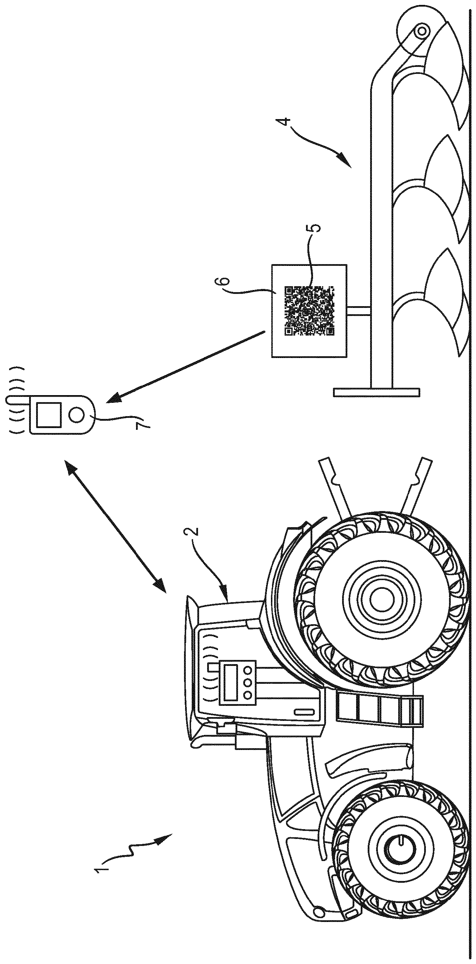

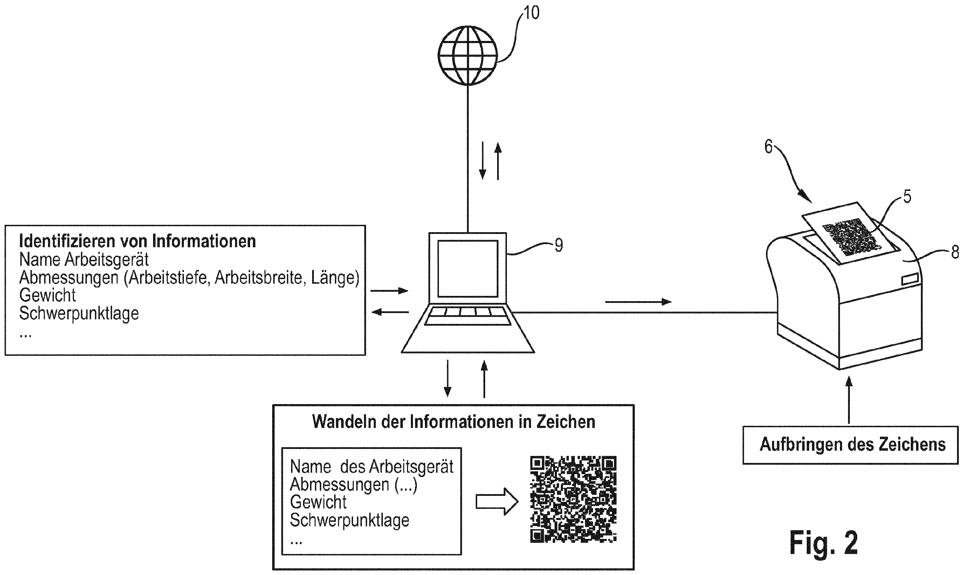

Die Erfindung wird nachfolgend anhand eines in den Fig. 1 und 2 veranschaulichten Ausführungsbeispiels näher erläutert. Darin zeigen:
- Fig. 1: eine schematische Ansicht eines Systems zur Erkennung eines Anbaugeräts,
- Fig. 2: eine schematische Ansicht eines Verfahrens zur Herstellung einer an ein Arbeitsgerät anbringbaren Kennzeichnung.

Fig. 1 zeigt in schematischer Ansicht ein System zur Erkennung eines an ein landwirtschaftliches Fahrzeug anbaubaren Anbaugeräts. An ein landwirtschaftliches Fahrzeug in Form eines Traktors 1 ist ein Arbeitsgerät 4 anbaubar, bei dem es sich im gezeigten Ausführungsbeispiel um einen Pflug handelt. Der Traktor 1 verfügt über einen bordeigenen Rechner 3, der Teil einer Einrichtung zur Steuerung und Überwachung von unterschiedlichen Arbeitseinstellungen des Traktors 1 ist. Dazu ist der Bordrechner 3 auf für sich gesehen bekannte Weise über eine Vielzahl von Kabeln mit Arbeitsaggregaten, Sensoren und Bedieneinrichtungen des Traktors 1 verbunden, die hier nicht näher dargestellt sind.

Der beispielhaft gezeigte Pflug 4 verfügt - wie viele andere in der landwirtschaftlichen Praxis benutzte Arbeitsgeräte - nicht über ein elektronisches Bussystem. Wird der Pflug 4 durch Einhängen in den heckseitigen Dreipunkt-Kraftheber an den Traktor 1 angebaut, so ist es für einen sicheren und effizienten Betrieb des Gespanns aus Traktor 1 und Arbeitsgerät 4 vorteilhaft, technische Merkmale wie beispielsweise Abmessungen, Gewicht, Schwerpunktlage des Arbeitsgeräts 4 zu berücksichtigen. Für andere Arbeitsgeräte können zahlreiche weitere bzw. andere Merkmale eine zu berücksichtigende Rolle im Betrieb spielen, insbesondere wenn beispielsweise mittels Zapfwelle und/oder Hydraulikleitungen vom Traktor 1 Antriebsleistungen an das Arbeitsgerät 4 zu übertragen sind oder wenn sonstige vom Traktor 1 zu berücksichtigende Einstellungen zu beachten sind.

Zur erleichterten Erkennung kennzeichnender Informationen des Arbeitsgeräts 4 zeichnet sich das in Fig. 1 gezeigte System aus durch ein dem Arbeitsgerät 4 zugeordnetes optisch lesbares Zeichen 5, welches das Arbeitsgerät 4 kennzeichnende Informationen enthält, sowie durch eine optische Leseeinrichtung 7, die betreibbar ist, aus dem Zeichen 5 darin enthaltene Informationen über das Arbeitsgerät 4 auszulesen. Konkret ist dazu am Arbeitsgerät 4 eine Kennzeichnung 6, hier in Form eines Schildes, angebracht. Die Kennzeichnung 6 enthält ein optisch lesbares Zeichen 5, das auf ein Trägermaterial aufgebracht ist, beispielsweise darauf gedruckt ist.

Das Zeichen 5 enthält Informationen, welche das Arbeitsgerät 4 kennzeichnen. Diese Informationen können beispielsweise umfassen: gerätespezifische Angaben für den Betrieb des Arbeitsgeräts 4 und/oder gerätespezifische Angaben zu Wartung, Reparatur und/oder Ersatzteilen des Arbeitsgeräts 4, und/oder individuell vergebbare Angaben zum Arbeitsgerät 4. Daneben könnten die Informationen einen Verweis auf eine weitere Informationsquelle, insbesondere eine Internetadresse umfassen.

Damit das Zeichen 5 eine hohe Informationsdichte aufweist und zudem zuverlässig maschinell auslesbar ist, liegen die in dem Zeichen enthaltenen Informationen in verschlüsselter Form vor. Wie in Fig. 1 angedeutet, handelt es sich bei dem Zeichen 5 um eine gemäß QR-Code (Quick Response Code) binär verschlüsselte zweidimensionale Matrix aus schwarzen und weißen Punkten. Die Matrix enthält Orientierungsmerkmale, welche das richtige Auslesen der enthaltenen Informationen unterstützen, und weist eine Fehlertoleranz auf, die ein Auslesen des Zeichens 5 auch bei bis zu etwa 30% verdeckter Fläche ermöglicht.

Im gezeigten Ausführungsbeispiel ist für das System eine optische Leseeinrichtung in Form eines sogenannten Smartphones 7 vorgesehen, d.h. einer mobilen persönlichen Kommunikationseinrichtung, die mit einer Kamera ausgestattet ist. Das Smartphone 7 lässt sich dazu verwenden, mittels der integrierten Kamera das Zeichen 5 optisch zu erfassen und auszulesen. Dazu ist in einen Arbeitsspeicher des Smartphones 7 ein ausführbares Anwendungsprogramm ladbar. Dieses Programm unterstützt eine Bildauswertung des erfassten Kamerabildes, indem zunächst der Matrix die darin enthaltenen Binärinformationen entnommen werden und anschließend eine Entschlüsselung in das Arbeitsgerät 4 kennzeichnende Informationen erfolgt.

Sollte das Zeichen 5 einen Verweis auf eine Internetadresse enthalten, so könnte das Smartphone 7 selbständig eine Verbindung zum Internet aufbauen, um auf diese Informationsquelle zuzugreifen.

Das Smartphone 7 verfügt weiterhin über eine Datenschnittstelle zum Bordrechner 3 des Traktors 1. Eine Datenaustauschverbindung kann vorzugsweise drahtlos (z.B. funkbasiert, WiFi, Bluetooth, Infrarot) und/oder lösbar kabelgebunden (z.B. USB-Schnittstelle) zu einem Bedienterminal des Bordrechners 3 in der Fahrerkabine 2 des Traktors 1 hergestellt werden, so dass mittels des Smartphones 7 ausgelesene Informationen über das Arbeitsgerät 4 vom Bordrechner 3 empfangen werden können. Auf diese Weise können im Zeichen 5 hinterlegte Informationen auf komfortablem und sicherem Weg dem Bordrechner 3 verfügbar gemacht werden.

Eine vorteilhafte Ausgestaltung des Systems sieht vor, dass der Bordrechner 3 als Teil einer Einrichtung zur Steuerung und/oder Überwachung von Arbeitseinstellungen des Traktors 1 auf Grundlage der empfangenen Informationen (des Arbeitsgeräts 4) konfigurierende Einstellungen am Fahrzeug 1 vornehmen kann. So kann das System also vorteilhaft dazu genutzt werden, den Traktor 1 für den Betrieb mit dem Arbeitsgerät 4 zu konfigurieren. Für einen Maschinenbediener entfällt damit eine aufwendige und fehlerträchtige Eingabe von Arbeitseinstellungen am Bordrechner 3 des Traktors 1. Aufgrund der einfachen und kostengünstigen Herstellbarkeit des optisch lesbaren Zeichens 5 sowie der Nutzbarkeit eines ggf. bereits vorhandenen Smartphones 7 (oder einer für diesen Zweck vergleichbaren anderen mobilen Kommunikationseinrichtung) ist der Aufwand für die Ausstattung der Maschinen (hier: Traktor 1 und Arbeitsgerät 4) verhältnismäßig gering.

Es sei angemerkt, dass das beschriebene Prinzip auch auf andere Paarungen von landwirtschaftlichem Fahrzeug und Arbeitsgerät anwendbar ist. Beispielsweise könnten auch Fahrzeuge wie selbstfahrende Erntemaschinen sowie deren Anbaugeräte (z.B. auch Vorsatzgeräte, Anhänger etc.) Teile eines wie zuvor beschriebenen Systems sein, wobei die optische Erkennung anhand eines optisch auslesbaren, dem Arbeitsgerät zugeordneten Zeichens ähnliche Effekte und Vorteile erzielt. Zudem sei angemerkt, dass statt eines hier beispielhaft genannten Smartphones 7 selbstverständlich auch eine alternative mobile Kommunikationseinrichtung mit der geforderten Funktion zum Einsatz kommen kann.

In Fig. 2 ist in schematischer Ansicht ein Verfahren zur Herstellung einer an ein Arbeitsgerät anbringbaren Kennzeichnung dargestellt. Es handelt sich dabei bevorzugt um eine Kennzeichnung 6, die an dem im Zusammenhang mit Fig. 1 erläuterten Arbeitsgerät 4 anbringbar ist.

Wie durch den gezeigten Rechner 9 veranschaulicht, wird das Herstellverfahren gemäß bevorzugtem Ausführungsbeispiel von einem elektronischen Datenverarbeitungsprogramm unterstützt, das auf dem Rechner 9 ausgeführt wird. Das Programm kann beispielsweise über Zugriff auf das Internet 10 oder über einen auslesbaren Datenträger (nicht gezeigt) in den Speicher des Rechners 9 ladbar sein.

Gemäß der Darstellung werden zur Herstellung der Kennzeichnung 6 zunächst Informationen identifiziert, die das Arbeitsgerät 4 kennzeichnen. Im gezeigten Beispiel handelt es sich hierbei um Name, Abmessungen (Arbeitstiefe, Arbeitsbreite, Länge), Gewicht und Schwerpunktlage des Arbeitsgeräts 4. Zahlreiche weitere und/oder andere Informationen könnten als gerätekennzeichnend identifiziert werden. Das Identifizieren der Informationen wird im Rahmen des auf dem Rechner 9 ausgeführten Datenverarbeitungsprogramms unterstützt, indem ein Benutzer im Rahmen einer Abfrageroutine zur Auswahl und/oder Eingabe von Informationen aufgefordert wird. Alternativ oder ergänzend kann vorgesehen sein, dass der Rechner 9 dabei über das Internet 10 auf Informationsquellen zurückgreift, um technische Informationen aller Art über das Arbeitsgerät zu erhalten oder zu vervollständigen. Neben technischen Daten könnten über das Internet auch zusätzliche Informationen wie Betriebsanleitungen, Wartungshinweise oder dergleichen abgerufen werden, die in dem zu erzeugenden Zeichen 5 hinterlegt sein könnten.

Sobald die kennzeichnenden Informationen identifiziert sind, wird der nächste Schritt des Wandelns der Informationen ausgelöst. Dies erfolgt ebenfalls vorzugsweise im Rahmen des auf dem Rechner 9 ausgeführten Datenverarbeitungsprogramms, indem der Rechner 9 die zuvor identifizierten Informationen in ein maschinell optisch lesbares Zeichen 5 wandelt. Dabei werden die Informationen vorzugweise verschlüsselt in eine zweidimensionale binäre Matrix in Form eines QR-Codes.

Das so vom Rechner 9 erzeugte Zeichen 5 wird schließlich auf einen Träger aufgebracht, der zusammen mit dem Zeichen 5 eine Kennzeichnung 6 bildet. Dazu übermittelt der Rechner 9 das (digital) erzeugte Zeichen 5 an einen Drucker 8, der das Zeichen 5 auf ein Trägermaterial wie beispielsweise Papier oder Folie druckt. Die so hergestellte Kennzeichnung 6 enthält - in verschlüsselter Form - maschinell optisch auslesbare Informationen über das Arbeitsgerät 4 und ist in Form oder als Teil eines Schildes an dem Arbeitsgerät 4 anbringbar. Für eine Anbringung am Arbeitsgerät 4 ist es zweckmäßig, eine geeignete Schutzeinrichtung vorzusehen, um das Zeichen 5 vor äußeren Umgebungseinflüssen wie insbesondere Witterung und/oder betriebsbedingter Verschmutzung zu schützen.

Das gemäß Fig. 2 beschriebene Verfahren erlaubt eine einfache und kostengünstige Herstellung einer Kennzeichnung. Durch die mögliche Nutzung gängiger informationstechnischer Einrichtungen wie einem Rechner und einem Drucker kann die Herstellung vorteilhaft sogar von einem Betreiber landwirtschaftlicher Maschinen selbst vorgenommen werden. Dadurch lassen sich Kennzeichnungen praktisch jederzeit einfach (nach-) produzieren. Weiterhin ist mit dem Verfahren eine individuelle Auswahl von Informationen problemlos möglich, so dass vorteilhaft auch vom Betreiber persönlich gewünschte Informationen in dem Zeichen hinterlegt sein können.

### Bezugszeichenliste

- 1: Traktor
- 2: Fahrerkabine
- 3: Bordrechner
- 4: Arbeitsgerät
- 5: Zeichen
- 6: Kennzeichnung
- 7: Smartphone
- 8: Drucker
- 9: Rechner
- 10: Internet

## Patentansprüche

1. Verfahren zur Herstellung einer an ein landwirtschaftliches Arbeitsgerät (4) anbringbaren Kennzeichnung (6), umfassend die Schritte:
Identifizieren von Informationen, die das Arbeitsgerät (4) kennzeichnen, wobei die Informationen gerätespezifische Angaben für den Betrieb des Arbeitsgeräts (4) umfassen und/oder gerätespezifische Angaben zu Wartung, Reparatur und/oder Ersatzteilen des Arbeitsgeräts (4) umfassen, und/oder individuell vergebbare Angaben zum Arbeitsgerät (4) in Form von persönlichen Erfahrungswerten oder Warnhinweisen umfassen, wobei die gerätespezifischen Angaben ein Gewicht, eine Schwerpunktlage des Arbeitsgeräts, hydraulische Kanalbelegungen, Ventileinstellungen, Flussraten, Zeitgeberwerte, Zapfwellengeschwindigkeiten und/oder Zapfwellenmomente umfassen, Wandeln der Informationen in ein optisch lesbares, verschlüsseltes Zeichen (5),
Aufbringen des Zeichens (5) auf einen Träger, der zusammen mit dem aufgebrachten Zeichen (5) die Kennzeichnung (6) bildet, wobei der Schritt des Aufbringens der Informationen im Rahmen eines elektronischen Datenverarbeitungsprogramms ausgeführt wird, indem das erzeugte Zeichen (5) an eine Druckeinrichtung (8) übergeben wird, um das Zeichen (5) auf den Träger zu drucken.

2. Verfahren nach Anspruch 1, **dadurch gekennzeichnet, dass** die Informationen einen Verweis auf eine weitere Informationsquelle, insbesondere eine Internetadresse, umfassen.

3. Verfahren nach Anspruch 1 oder 2, **dadurch gekennzeichnet, dass** der Schritt des Identifizierens der Informationen im Rahmen eines elektronischen Datenverarbeitungsprogramms ausgeführt wird.

4. Verfahren nach Anspruch 3, **dadurch gekennzeichnet, dass** das Datenverarbeitungsprogamm eine Abfrageroutine aufweist, welche zur Auswahl und/oder Eingabe kennzeichnender Informationen des Arbeitsgeräts (4) durch eine Bedienperson auffordert.

5. Verfahren nach einem der Ansprüche 1 bis 4 **dadurch gekennzeichnet, dass dadurch gekennzeichnet, dass** die Informationen beim Wandeln in das optisch lesbare Zeichen (5) verschlüsselt werden.

6. Verfahren nach Anspruch 5, **dadurch gekennzeichnet, dass** die Informationen als zweidimensionale Matrix, insbesondere als QR-Code, verschlüsselt werden.

7. Verfahren nach einem der Ansprüche 1 bis 6, **dadurch gekennzeichnet, dass** der Schritt des Wandelns der Informationen im Rahmen eines elektronischen Datenverarbeitungsprogramms ausgeführt wird.

8. Verfahren nach einem der Ansprüche 3 bis 7, **dadurch gekennzeichnet, dass** das elektronische Datenverarbeitungsprogramm zumindest teilweise auf einer mobilen Kommunikationseinrichtung (7) ausführbar ist.

9. Kennzeichnung (6) eines landwirtschaftlichen Arbeitsgeräts (4), hergestellt nach einem Verfahren gemäß einem der Ansprüche 1 bis 8, umfassend ein optisch lesbares Zeichen (5), das Informationen enthält, welche das Arbeitsgerät (4) kennzeichnen.

10. Kennzeichnung nach Anspruch 9, **dadurch gekennzeichnet, dass** diese in Form oder als Teil eines Schildes an dem Arbeitsgerät (4) anbringbar ist.

11. Kennzeichnung nach Anspruch 9 oder 10, **gekennzeichnet durch** eine Schutzeinrichtung, die das Zeichen (5) vor äußeren Umgebungseinflüssen, wie insbesondere Witterung und/oder betriebsbedingter Verschmutzung schützt.

## Claims

1. Process for producing a label (6) that can be applied to an agricultural implement (4), comprising the steps:
identifying information that characterizes the implement (4), wherein the information comprises implement-specific details for operating the implement (4) and/or implement-specific details on maintenance, repair and/or spare parts of the implement (4), and/or comprises individually assignable details about the implement (4) in the form of personal experience values or warning messages, wherein the implement-specific details comprise a weight, a position of centre of gravity of the implement, hydraulic channel allocations, valve settings, flow rates, timer values, PTO shaft speeds and/or PTO shaft torques,
converting the information into an optically readable, encrypted symbol (5), applying the symbol (5) to a support which, together with the applied symbol (5), forms the label (6), wherein the step of applying the information is carried out within the framework of an electronic data processing program, in that the produced symbol (5) is transferred to a printing device (8) to print the symbol (5) on the support.

2. Process according to claim 1, **characterized in that** the information comprises a reference to a further information source, in particular an internet address.

3. Process according to claim 1 or 2, **characterized in that** the step of identifying the information is carried out within the framework of an electronic data processing program.

4. Process according to claim 3, **characterized in that** the data processing program has a query routine which prompts the operator to select and/or input information characterizing the implement (4).

5. Process according to one of claims 1 to 4, **characterized in that** the information is encrypted when converted into the optically readable symbol (5).

6. Process according to claim 5, **characterized in that** the information is encrypted as a two-dimensional matrix, in particular as QR code.

7. Process according to one of claims 1 to 6, **characterized in that** the step of converting the information is carried out within the framework of an electronic data processing program.

8. Process according to one of claims 3 to 7, **characterized in that** the electronic data processing program can be at least partially executed on a mobile communication device (7).

9. Label (6) of an agricultural implement (4), produced by a process according to one of claims 1 to 8, comprising an optically readable symbol (5) that contains information which characterizes the implement (4).

10. Label according to claim 9, **characterized in that** it can be applied to the implement (4) in the form of or as part of a plate.

11. Label according to claim 9 or 10, **characterized by** a protective device which protects the symbol (5) from external environmental influences such as in particular weathering and/or operational pollution.

## Revendications

1. Procédé de fabrication d'un marquage (6) à apposer sur un outil de travail agricole (4), comprenant les étapes consistant à :
identifier des informations qui caractérisent l'outil de travail (4), les informations comprenant des données spécifiques à l'outil pour le fonctionnement de l'outil de travail (4) et/ou comprenant des données spécifiques à l'outil pour l'entretien, la réparation et/ou des pièces de rechange de l'outil de travail (4), et/ou comprenant des données attribuables individuellement à l'outil de travail (4) sous forme de valeurs empiriques personnelles ou de messages d'alerte, les données spécifiques à l'outil comprenant un poids, une position de centre de gravité de l'outil de travail, des circuits hydrauliques, des réglages de valves, des débits, des valeurs d'horloge, des vitesses de prise de force et/ou des couples de prise de force, convertir les informations en un signe (5) lisible optiquement, crypté,
apposer le signe (5) sur un support qui, avec le signe (5) apposé, forme le marquage (6), l'étape qui consiste à apposer les informations s'effectuant dans le cadre d'un programme informatique électronique au cours duquel le signe (5) généré est transmis à un équipement d'impression (8) afin d'imprimer le signe (5) sur le support.

2. Procédé selon la revendication 1, **caractérisé en ce que** les informations comprennent un renvoi à une source d'informations supplémentaire, en particulier une adresse Internet.

3. Procédé selon la revendication 1 ou 2, **caractérisé en ce que** l'étape d'identification des informations est exécutée dans le cadre d'un programme informatique électronique.

4. Procédé selon la revendication 3, **caractérisé en ce que** le programme informatique comporte une routine d'interrogation qui invite une personne utilisatrice à sélectionner et/ou à entrer des informations caractérisant l'outil de travail (4).

5. Procédé selon une des revendications 1 à 4, **caractérisé en ce que** les informations sont cryptées lors de la conversion en signe (5) lisible optiquement.

6. Procédé selon la revendication 5, **caractérisé en ce que** les informations sont cryptées sous forme de matrice bidimensionnelle, en particulier de code QR.

7. Procédé selon une des revendications 1 à 6, **caractérisé en ce que** l'étape de conversion des informations est exécutée dans le cadre d'un programme informatique électronique.

8. Procédé selon une des revendications 3 à 7, **caractérisé en ce que** le programme informatique électronique peut être exécuté au moins en partie sur un équipement de communication mobile (7).

9. Marquage (6) d'un outil de travail agricole (4) fabriqué selon un procédé conforme à une des revendications 1 à 8, comprenant un signe (5) lisible optiquement, lequel contient des informations qui caractérisent l'outil de travail (4).

10. Marquage selon la revendication 9, **caractérisé en ce qu'**il peut être apposé sur l'outil de travail (4) sous la forme ou en tant que partie d'un panneau.

11. Marquage selon la revendication 9 ou 10, **caractérisé par** un agencement de protection qui protège le signe (5) des influences environnementales extérieures, comme en particulier des intempéries et/ou des salissures dues au fonctionnement.
